# EUROPEAN PATENT SPECIFICATION

(11) **EP 1 649 759 B1**
(45) Date of publication and mention of the grant of the patent: **30.06.2010**
(21) Application number: 04747291.5
(22) Date of filing: 09.07.2004
(51) Int. Cl.: A23L 1/226

(54) **FLAVOR ENHANCER, FOOD OR BEVERAGE CONTAINING THE FLAVOR ENHANCER, AND METHOD OF FLAVOR ENHANCEMENT**
GESCHMACKSVERSTÄRKER, NAHRUNGSMITTEL- ODER GETRÄNKEPRODUKT, DAS DEN GESCHMACKSVERSTÄRKER ENTHÄLT SOWIE GESCHMACKSVERSTÄRKUNGSVERFAHREN
RENFORCATEUR D'AROME, ALIMENT OU BOISSON CONTENANT CE RENFORCATEUR D'AROME ET PROCEDE DE RENFORCEMENT D'UN AROME

(30) Priority: 10.07.2003 JP 2003272757
(43) Date of publication of application: 26.04.2006
(73) Proprietor: Takasago International Corporation, Tokyo 144-8721 (JP)
(72) Inventor: KUNIEDA, Satomi, Takasago International Corporat., Hiratsuka-shi, Kanagawa, 2540073 (JP)
(74) Representative: Neidl-Stippler, Cornelia
(86) International application number: PCT/JP2004/009823
(87) International publication number: WO 2005/004635

(56) References cited:
- EP-A- 1 121 927
- JP-A- 2000 080 393
- JP-A- 2002 003 430
- W.G. GALETTO ET AL.: "Some benzyl ethers present in the extract of vanilla (Vanilla planifolia)" JOURNAL OF AGRICULTURAL AND FOOD CHEMISTRY., vol. 26, no. 1, 1978, pages 195-197, XP002423748 USAMERICAN CHEMICAL SOCIETY. WASHINGTON.
- A. MATTIA ET AL.: "Hydroxy- and alkoxy-substituted benzyl derivatives" WHO FOOD ADDITIVES SERIES, no. 48, 2002, pages 273-332, XP008076190 CHWORLD HEALTH ORGANIZATION, GENEVA

## Description

### Field of the Invention

The present invention relates to a flavor enhancer giving a body to a food or beverage or enhancing a body of a food or beverage, a food or beverage containing the flavor enhancer, and a method of enhancing the flavor of a food or beverage by using the flavor enhancer.

### Background Art

The taste of foods is felt in a complicatedly intertwining manner with five basic tastes, sweetness, sourness, saltiness, bitterness and umami, as well as pungency, astringency, metallic taste, body, width, thickness, and others. Concerning the aforementioned five basic tastes, there exist substances that induce each taste. As everybody knows, for example, sweetness is triggered by monosaccharides and disaccharides such as glucose, fructose, sucrose, and maltose, sucrose derivatives such as coupling sugar, sugar alcohols such as reducing sugar maltose, glycosides such as steviocide, amino acid-based sweeteners such as Aspartame, synthetic chemicals such as saccharin, and the like; sourness is triggered by organic acids such as acetic acid and citric acid, and the like; saltiness is triggered by salts such as sodium chloride, and the like; bitterness is triggered by alkaloids such as caffeine, terpenoids such as limonoid, glycosides such as naringin, inorganic salts such as magnesium sulfate, and the like; and umami is triggered by amino acid- or nucleic acid-based umami substances such as glutamic acid and inosinic acid. When a food or beverage tastes well balanced and without significant problem but yet somewhat unsatisfactory, an ingredient that enhances one of the five basic tastes above is often added thereto, but it results in the problem of excessive enhancement of only one taste or reinforcement of entire taste. To solve the problem, various flavor enhancers and methods of improving the flavor, that enhance or improve the taste of various foods, beverages, and seasonings have so far been developed.

For example, known methods of giving a body to a food or beverage or enhancing a body of a food or beverage include addition of an animal-or vegetable-protein hydrolysate such as enzyme hydrolysate of a non-collagen animal- or vegetable-protein (see Patent Document 1 below) and addition of a yeast suspension, yeast extract, animal meat extract, seafood extract, or the like. The "body" of a food or beverage is, for example, a sense of a favorable impression of taste and a flavor spreading in the entire mouth when it is taken. The "body" (also called amplitude or mouthfulness) is an important factor in gustatory evaluation of foods and beverages, and always included in overall evaluation of the taste of foods and beverages. The methods of giving a body to a food or beverage or enhancing a body thereof other than the methods above include, for example, a method of using a flavor improver containing a flavoring ingredient selected from trimethylamine, 1-methoxy-2-propanol, n-butyl alcohol, 1-ethoxy-2-propanol, and the like (see Patent Document 2 below) ; and a method of using a raw flavoring material containing (a) sotolone and/or 5-ethyl-3-hydroxy-4-methyl-2(5H)-furanone, and (b) one or more compounds selected from the group consisting of dimethyl sulfide, methanethiol, hydrogen sulfide, dimethyl disulfide, and dimethyl trisulfide (see Patent Document 3 below). However, these flavor-enhancing materials known in the art have their own characteristic tastes and flavors, often causing destruction of the balance in the taste and flavor of a food or beverage, depending on the kind of the food or beverage. Thus, it has been difficult to add such a material to a wide range of foods and beverages independently of its kind, without destructing the balance in taste and flavor inherent to the product.

On the other hand, vanillyl alcohol derivatives taste extremely pungent and there are known that they give a warm sensation when rubbed on the skin (see Patent Document 4 below) . Also known are the facts that addition of a vanillyl alcohol derivative to toothpaste formulation is effective in enhancing the cool and refreshing feeling caused by menthol (see Patent Document 5 below). Further, it is also known that inclusion of the vanillyl alcohol derivative in a cyclodextrin or branched cyclodextrin alleviates the bitterness and unfavorable tastes such acridness of the vanillyl alcohol derivative itself, and it is also effective in improving the intensity and long-lasting property of the cool sensation or cool and refreshing feeling effect when used together with a cool and refreshing feeling agent or a cooling sensation agent (see Patent Document 6 below). Thus, there has been known that the vanillyl alcohol derivatives and the inclusion compounds thereof give bitterness to a food or beverage or give a warm or cool feeling effect to various products when added, but there is no report indicating that the vanillyl alcohol derivatives and the inclusion compounds thereof are effective in giving a body to a food or beverage.
Patent Document 1: Japanese Patent Application Laid-Open No. (JP-A)
Patent Document 2: JP-A 2000-139397
Patent Document 3: JP-A 2001-79336
Patent Document 4: Japanese Patent Application Publication No. (JP-B) 61-9293
Patent Document 5: JP-B 61-55889
Patent Document 6: JP-A 2002-3430

EP-A-1167435 refers to the use of inclusion compounds of vanillyl alcohol derivatives to enhance the stability of the vanillyl alcohol derivative and to prolong the pungent taste and heating effects of vanillyl alcohol derivative per se or the refresh-feeling heightening effect of vanillyl alcohol derivative if this is used in combination with a refreshing agent. The inclusion compound enables the preparation of oral care compositions, external cosmetics and of food. EP-A-1167435 needs always a host compound (mostly cyclodextrine) for the vanillyl alcohol derivative to hinder negative effects of the vanillyl alcohol derivative. The negative effects of vanillyl alcohol derivatives are inter alia an impure taste and bad water solubility if used alone. So EP-A-1167435 teaches that vanillyl alcohol derivative should not be used without a host compound alone.

The present invention has been made in view of the current circumstances above, and an object of the invention is to provide a flavor enhancer and a method of enhancing flavor, giving a body to a food or beverage or enhancing a body of a food or beverage without impairing the taste balance, taste, and flavor inherent to the food or beverage. The "body" in the present invention also includes a sensation of harmonizing "mildness", "width", and "depth, thickness, and richness" and satisfying them at the same time. Another object of the present invention is to provide a food or beverage containing the flavor enhancer.

### Disclosure of the Invention

After intensive studies to solve the problems above, the present inventors have found that it is possible to give a food or beverage a body, width, smoothness, depth, and thickness, or enhance those of the food or beverage without damaging the taste, taste balance, flavor, and flavor balance inherent to the food or beverage by adding a vanillyl alcohol derivative or a formedproduct of the vanillyl alcohol derivative to the food or beverage, continued further studies based on the finding, and completed the present invention.

Accordingly, the present invention relates to a flavor enhancer comprising:
(A) a vanillyl alcohol derivative represented by General Formula 1: 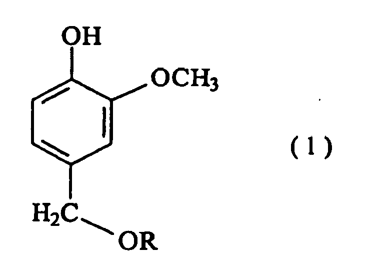 (wherein R is an alkyl group having 1 to 6 carbon atoms), and/or a formed product thereof;
(B) one or more materials selected from, salty seasonings and umami seasonings; and
(C) a flavoring and/or a spice.

Further, the present invention relates to the flavor enhancer above, wherein R in General Formula 1 of component (A) represents a n-butyl group.

Furthermore, the present invention relates to the flavor enhancer above, wherein the component (C) is at least one kind selected from ginger oleoresin, chili pepper oleoresin, pepper oleoresin, jamboo oleoresin, Japanese pepper oleoresin, gingerone, capsaicin, dihydrocapsaicin, piperine, piperidine, chavicine, spilanthol, α-sanshool, β-sanshool, sanshoamide, 4-(L-menthoxymethyl)-2-(3',4'-dihydroxyphenyl)-1,3-dioxolane, 4-(L-menthoxymethyl)-2-(3'-methoxy-4'-hydroxyphenyl)-1,3-dioxolane, 4-(L-menthoxymethyl)-2-(3'-ethoxy-4'-hydroxyphenyl)-1,3-dioxolane, alkanoic vanillyl amides (wherein the alkanoic acid has 7 to 12 carbon atoms), vanillin alkylene glycol acetals (wherein the alkylene group has 3 to 6 carbon atoms), and ethyl vanillin alkylene glycol acetal (wherein the alkylene group has 3 to 6 carbon atoms).

In addition, the present invention relates to a food or beverage containing any one of the flavor enhancers described above.

Further, the present invention relates to a method of enhancing the flavor of a food or beverage by adding any one of the flavor enhancers to the food or beverage.

### Brief Description of the Drawings

FIG. 1 is a graph showing the results obtained by organoleptic evaluation of the nutrition supplement beverage [with vanillyl-n-butyl ether (VBE) ] obtained in Example 6 and the nutrition supplement beverage (without VBE) obtained in Comparative Example 4.
FIG. 2 is a graph showing the results obtained by organoleptic evaluation of the potato chips obtained in Example 7 (with VBE) and the potato chips (without VBE) obtained in Comparative Example 5.
FIG. 3 is a graph showing the results obtained by organoleptic evaluation of the curry obtained in Example 8 (with VBE) and the curry (without VBE) obtained in Comparative Example 6.

### Detailed Description of the Invention

Hereinafter, the present invention will be described in detail.

The flavor enhancer of the present invention contains a vanillyl alcohol derivative represented by General Formula 1 above and/or a formed product of the vanillyl alcohol derivative. In General Formula 1 above, R represents an alkyl group having 1 to 6 carbon atoms. The alkyl group may be a straight-chain or branched alkyl group, and typical examples thereof include methyl, ethyl, n-propyl, iso-propyl, n-butyl, iso-butyl, pentyl, and hexyl groups.

Among the vanillyl alcohol derivatives represented by General Formula 1 above, vanillyl-n-butyl ether represented by Formula 2 below and vanillylethyl ether represented by Formula 3 below are preferable.

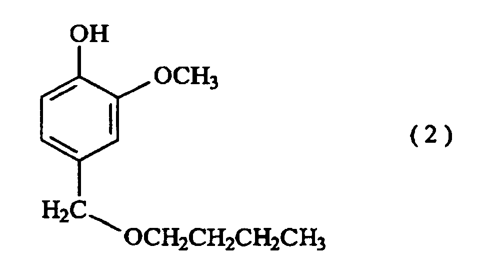

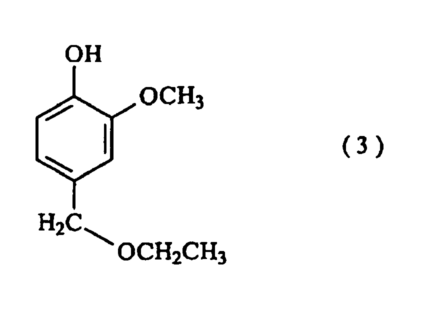

In the present invention, the formed products of the vanillyl alcohol derivative include those in various shapes formed by processing the vanillyl alcohol derivative with processing methods such as powdering, granulation, and emulsification. The form of the formed product is not particularly limited if it is one of the forms commonly known. Any one of commonly practiced processing methods, such as powdering, granulation, and emulsification, may be used as the processing method.

For example, as the pulverization of the vanillyl alcohol derivative, there is exemplified a method of including the vanillyl alcohol derivative in cyclodextrin (hereinafter, referred to as CD) . Inclusion of vanillyl alcohol derivatives is described in detail in Patent Document 6 above, and in the present invention, the inclusion of vanillyl alcohol derivative represented by General Formula 1 above may be conducted by the method described in Patent Document 6. Any one of CD's described in Patent Document 6 above may be used as the CD for inclusion according to the present invention, and examples of CD's include non-branched cyclodextrins such as α-CD, β-CD, and γ-CD; and branched cyclodextrins, i.e., the CD's above to which one or two moles of small saccharides such as glucose, maltose, or maltotriose are connected thereto through α-1,6 bonding, and the CD's to which three to eight moles of hydroxypropyl groups are connected thereto by addition of propylene oxide. These CD's may be used alone or in combination of two or more thereof. Of these CD's, β-CD is particularly preferred for use.

A typical example of the method of preparing a powder of the CD inclusion compound of a vanillyl alcohol derivative is one comprising steps of forming an inclusion compound between the vanillyl alcohol derivative and CD by contact thereof in the presence of water and then filtering and drying the inclusion compound obtained. In the aforementioned processes, the vanillyl alcohol derivative and CD are generally brought into contact with each other by dissolving the CD in water, then adding the vanillyl alcohol derivative thereto, and stirring or shaking the mixture for several seconds to several hours in a stirring machine or homogenizer or ultrasonicating the mixture. The vanillyl alcohol derivative may be added as it is or after dissolved ina suitable organic solvent such as ethanol. The amount of the vanillyl alcohol derivative used is generally 0.1 to 1 mole to 1 mole of CD, and the temperature of the contact reaction is normally 0 to 70°C.

Other powdering methods include an adsorption powdering method of making the vanillyl alcohol derivative adsorbed on saccharides such as oligosaccharide, dextrin, or starch which are used as excipient (carrier), and a method of spray-drying the vanillyl alcohol derivative with the excipient above and an emulsifier such as a fatty acid ester of sucrose, a fatty acid ester of polyglycerol, or quillaiasaponin. Also included is a method of spray-drying the vanillyl alcohol derivative with a natural gum such as gum arabic, a processed starch, or the like. Yet other methods include an extrusion-molding method of mixing the vanillyl alcohol derivative with two or more of saccharides such as sucrose and maltose and sugar alcohols such as paratinit and maltitol, dissolving the mixture, for example, in water under heat, then extruding, and drying, thus forming a powder thereof; and a coacervation method utilizing the phase separation by gelatin, agar or the like. Any one of the pulverization methods above can be adopted according to applications of the flavor enhancer to prepare a formed product of powdery form.

In addition, the powder obtained by the aforementioned method may be further processed together with gelatin, pullulan or lactose as a binder by a fluidized-bed granulation method to prepare a formed product granulated in a granular shape. The powder or granule obtained by the above-described method may be coated additionally. The coating method may be any one of known methods, and examples thereof include spray coating,fluidized-bed coating, centrifugal coating, and contact coating. The coating material is also not particularly limited, and any one of water-soluble coating materials such as saccharides, pectin, agar, methylcellulose, pullulan, and gelatin and oil-soluble coating materials such as hydrogenated oils which are solid at normal temperature, for example, rice bran wax and palm oil may be used suitably according to applications. In this method, it is also possible to use a water-soluble coating material and an oil-soluble coating material in combination.

The formed products prepared by the emulsification may also be those prepared by any one of known methods. And examples thereof include an emulsion prepared by dissolving the vanillyl alcohol derivative together with an emulsifier such as a fatty acid ester of sucrose, a fatty acid ester of polyglycerol, quillaiasaponin, and lecithin or a natural gum such as gum arabic, and then stirring and blending the mixture, for example, in a TK mixer or emulsifying it in a high-pressure homogenizer.

The formed product of the present invention may be produced by mixing, in addition to the various additives described above, one or more ingredients selected from flavorings, colorants, acidulants, vitamins, sweetening, seasoning, spices, food ingredients, functional substances, and the like as needed with the vanillyl alcohol derivative, and subjecting the mixture to the various form processings described above.

The flavor enhancer of the present invention may consist of a vanillyl alcohol derivative represented by General Formula 1 above and/or a formed product of the vanillyl alcohol derivative, and also may comprise (A) the vanillyl alcohol derivative and/or the formed product of the vanillyl alcohol derivative, (B) one or more materials selected from sweetenings, salty seasonings, and umami seasonings, and (C) a flavoring and/or a spice.

Hereinafter, the components (B) and (C) above will be described in detail. The component (B) includes one or more materials selected from sweetenings, salty seasonings, and umami seasonings. Any one of sweetenings hitherto used in conventional foods and beverages may be used as the sweetening according to the present invention. Typical examples of the sweetenings for use in the present invention include saccharide sweetenings such as honey, maple sugar, granulated sugar, white soft sugar, black sugar, wasanbon sugar (processed refining sugar), sanbon sugar, powder sugar, sucrose, raffinose, trehalose, palatinose, palatinose oligosaccharides, fructooligosaccharides, glucose, isomaltooligosaccharides, maltooligosaccharides, maltose, fructose, lactose, lactulose, galactooligosaccharides, soybeanoligosacharides, and xylose; sugar alcohols such as glycerol, sorbitol, mannitol, maltitol, xylitol, erythritol, reducing palatinose, reducing starch hydrolysates, reducing isomaltooligosaccharides, and reducing maltooligosaccharides; non-saccharide natural sweetenings such as stevia, steviocide, and glycyrrhizin; and synthetic sweetenings such as saccharin, Aspartame, and acesulfame K.

Alternatively, examples of the salty seasonings in the component (B) include sodium chloride, potassium chloride, and the like. Sodium chloride is generallyusedas the salty seasoning for foods and beverages, and is supplied normally as a cooking salt. There are many methods of producing a cooking salt and various kinds of salts depending on the production method, such as cooking salt, purified sodium chloride having a purity of 99.5% or more, a cooking salt coated with magnesium carbonate are provided. In addition, as salts, there are natural salt and rock salt. Any one of these salts may be used favorably as the salty seasoning according to the present invention.

In addition, as the umami seasoning in the component (B), any one of umami seasonings as far used in production of conventional foods and beverages may be used. Typical examples of the umami seasonings include amino acid-based umami seasonings such as sodium L-glutamate; and nucleic acid-based umami seasonings such as sodium 5'-inosinate and sodium 5'-guanylate. Other umami seasonings include HVP's (hydrolyzed vegetable proteins), HAP's (hydrolyzed animal proteins), yeastextract, soysauce,miso (beanpaste), sea-foodoranimalextracts, vegetable extracts, and the like; and the powders and granules thereof may also be used. A combined seasoning containing an amino acid-based umami seasoning and a nucleic acid-based umami seasoning described above as principal ingredients may also be used favorably as the umami seasoning.

The component (C) will be described below. The component (C) includes a flavoring and/or a spice. Examples of the spices in the component (C) include some of fragrant plants that have a favorable flavor, a pungent taste, and colorants. Such spices are grossly grouped according to their properties into fragrant spices such as cardamom, nutmeg, fenugreek, cumin, thyme, bay leaf, clove, fennel, coriander, saffron, caraway, juniper berry, anis, sage, mace, vanilla, parsley, celery, and perilla (shiso); and spicy spices such as black pepper, white pepper, chili (chili pepper), sansho (Japanese pepper), mustard, onion, wasabi (Japanese leek), Japanese radish, leek, smartweed, garlic, ginger, turmeric, cinnamon, allspice, and jamboo. The spicy spices are particularly preferred as the spice of the component (C) according to the present invention.

In the present invention, the forms of the spices for use are also not particularly limited, and may be dried goods of technical products such as fruit, bark, stem, leaf, seed, or root of the raw plant or powdered goods of the dried technical products. These spices are preferably used in combination of two or more thereof as needed. These spices according to the present invention are prepared by processing each technical product described above by a known method.

An example of other processing methods is extraction of each technical product of plant above with hydrated alcohol. The formed products obtained by the method, which are called tincture, extract, or infusion, are usually soluble in water.

Another method is steam distillation of each technical product of the plant above. Essential oil obtained by this method is oil-soluble form. The essential oil can also be obtained by subcritical or supercritical extraction. The essential oil may be processed additionally with hydrated alcohol to obtain an essence, and it can be used as the component (C).

Yet another method is extraction of each technical product of the plant above normally with a volatile solvent such as acetone, alcohol, ether, or propyl alcohol and subsequent removal of the solvent under normal or reduced pressure. The product obtained by the method is an oleoresin. In the present invention, use of such an oleoresin is preferred.

The above-mentioned essential oil or oleoresin can also be used after formulation. For example, the form of the essential oil or oleoresin when used in the present invention include an emulsion form prepared by emulsification with gum arabic or an emulsifier; a powder form prepared by adding an excipient such as dextrin to the emulsion as needed and then spray-drying the mixture; or a adsorption powder form prepared by merely spraying the essential oil itself without emulsification or the oleoresin dissolved in fat or the like on an excipient.

In addition, the spices according to the present invention also include spicy substances contained in the fragrant plants above and their analogues.

Examples of the spicy substances and the analogues thereof described above include capsaicins such as capsaicin, dihydrocapsaicin, nordihydrocapsaicin, homodihydrocapsaicin, homocapsaicin, and vanillylpelargoamide; piperines such as piperine, isopiperine, isoshavicine, chavicine, piperanine, and piperidine; pungent amide substances such as spilanthol, α-sanshool, β-sanshool, and sanshoamide; gingerols such as gingerone, shogaol, and gingerol; isothiocyanates such as allyl isothiocyanate, β-phenethyl isothiocyanate, 6-methylthiohexyl isothiocyanate, ω-pentenyl isothiocyanate, p-hydroxybenzyl isothiocyanate, 4-methylthiobutenyl isothiocyanate, and butyl isothiocyanate; and polygodials such as (-)-polygodial. Other examples of the spicy substances and the analogues include 4-(L-methoxymethyl)-2-(3',4'-dihydroxyphenyl)-1,3-dioxolane, 4-(L-methoxymethyl)-2-(3'-methoxy-4'-hydroxyphenyl)-1,3-dioxolane, 4-(L-menthoxymethyl)-2-(3'-ethoxy-4'-hydroxyphenyl)-1,3-dioxolane, alkanoic vanillyl amides (wherein the alkanoic acid has 7 to 12 carbon atoms), vanillin alkylene glycol acetals (wherein the alkylene group has 3 to 6 carbon atoms), ethyl vanillin alkylene glycol acetals (wherein the alkylene group has 3 to 6 carbon atoms), and the like.

Preferred examples among the spices above include ginger oleoresin, chili pepper oleoresin, pepper oleoresin, jamboooleoresin, Japanese pepper oleoresin, gingerone, capsaicin, dihydrocapsaicin, piperine, piperidine, chavicine, spilanthol, α-sanshool, β-sanshool, sanshoamide, 4-(L-menthoxymethyl)-2-(3',4'-dihydroxyphenyl)-1,3-dioxolane, 4-(L-menthoxymethyl)-2-(3'-methoxy-4'-hydroxyphenyl)-1,3-dioxolane, 4-(L-menthoxymethyl)-2-(3'-ethoxy-4'-hydroxyphenyl)-1,3-dioxolane, alkanoic vanillyl amides (wherein the alkanoic acid has 7 to 12 carbon atoms), vanillin alkylene glycol acetals (wherein the alkylene group has 3 to 6 carbon atoms), and ethyl vanillin alkylene glycol acetals (wherein the alkylene group has 3 to 6 carbon atoms).

In addition, as the flavoring of the component (C), any one of flavorings used in conventional foods and beverages can be used. The flavoring may be referred to as flavor in the present invention. Examples of the flavorings used in the present invention include citrus flavorings such as orange, lemon, grapefruit, lime, tangerine, mandarin, citron, sudachi citron, kabosu citron, and sweety; fruit flavorings such as apple, banana, grape, peach, strawberry, pineapple, melon, apricot, plum, Japanese pear, pear, rasberry, and mango; mint flavorings such as peppermint and spearmint; vegetable flavorings such as tomato, carrot, bell pepper, celery, shiitake, and mushroom; spice flavorings such as pepper, cinnamon, nutmeg, and clove; nut flavorings such as vanilla, coffee, cocoa, hazel nut, almond, walnut, pecan, and macadamia nut; tea flavorings such as black tea, green tea, and oolong tea; animal-meat or sea-food flavorings such as beef, chicken, salmon, and crab; and dairy flavorings such as milk, cheese, fresh cream, and butter. As the flavorings, there can be use not only preparation flavors but also the essential oil or the oleoresin alone depending on the kind of the flavoring. Other examples of the flavorings according to the present invention include single-component flavorings such as citral, linalool, citronellol, limonene, α-pinene, β-ionone,methyljasmonate, jasmine lactone, cis-jasmone, geraniol, 1-menthol, vanillin, eugenol, borneol, cineol, α-terpineol, thymol, caryophyllene, cinnamic aldehyde, anisaldehyde, cuminaldehyde, menthone, camphor, carvone, anethole, γ-decalactone, 3-cyclopentanone, 2-cyclopentanone, 2-acetylpyrrole, pyridine, pyrazine, thiazole, dimethyl sulfide, thiophene, methyl 3-methylthiopropionate, isoamyl alcohol, hexanal, diacetyl, 2-methyl propionic acid, trimethylamine, 1,8-cineol, acetonitrile, 2-ethylphenol, and 2-methylfuran. In addition, for example, the flavorings used in foods and beverages described in Arctander Perfume and Flavor Chemicals (Aroma chemicals) may also be used. A flavoring mixture of these single-component flavorings at an arbitrary ratio may also be used in the present invention. These single-component flavorings can be extracted or separated from natural plant and also prepared chemically. Extracts itself of coffee, black tea, dried bonito, and the like obtained by supercritical fluid extraction, natural juices, and the powdery products thereof can also be used as the flavorings. However, the flavoring used in the present invention is not limited by these typical examples.

A savory flavoring is used particularly favorably as the flavoring according to the present invention. The savory flavoring is a flavoring for incorporating to primarily salty taste foods and beverages, as the savory flavoring originates the meaning of the word "savory" (that means a salty and sharp-tasting food). Typical examples of the savory flavorings include vegetable flavorings, spice flavorings, nut flavorings, animal-meat or sea-food flavorings, dairy flavorings, and the like among the flavorings above. Alternatively, the single-component or natural flavoring described above may also be used. However, the flavorings are not limited to the typical examples above.

In the present invention, when the vanillyl alcohol derivative represented by General Formula 1 above and/or the formed product of the vanillyl alcohol derivative of the component (A) is used together with one or more selected from sweetenings, salty seasonings, and umami seasonings of the component (B) and a flavoring and/or a spice of the component (C) and these are added as a flavor enhancer of the present invention to a food or beverage, the body of the food or beverage can be enhanced without need for excessive addition of sweetening, salty seasoning or umami seasoning in the components (B) and without altering the blending balance of spice and flavoring in the components (C).

In the present invention, it is also possible to obtain a flavor enhancer by adding one or more selected from sweetenings, salty seasonings and umami seasonings of the components (B) and a flavoring and/or a spice of the component (C) to the vanillyl alcohol derivative represented by General Formula 1 above and then powdering, granulating, or emulsifying the mixture as described above.

In addition, one or more ingredients selected from colorants, sour seasonings (acidulants), vitamins, seasonings, food ingredients, functional substances, and others may be incorporated into the flavor enhancer of the invention.

The sour seasoning may be any one of those commonly used in foods and beverages. Typical examples of the sour seasoning used in the present invention include citric acid, malic acid, ascorbic acid, succinic acid, fumaric acid, and acetic acid. Typical examples of the vitamins include oil-soluble vitamins such as vitamin A, vitamin D and vitamin E and water-soluble vitamins such as vitamin B groups and vitamin C. Examples of the functional materials include perilla (shiso) extract, polyphenols such as buckwheat, propolis, royal jelly, and the like. The colorants and seasonings can be used any one of colorants and seasonings conventionally used in foods and beverages freely.

The flavor enhancer of the present invention can be blended in various foods and beverages. Examples of the foods and beverages include a wide range of foods and beverages, for example, beverages such as fruit drink, sports drink, vegetable juice, fermented lactic drink, carbonated beverage, coffee, cocoa, black tea, oolong tea, green tea, sake, alcohol, and powdered drink; confectionery products such as candy, chewing gum, tabletted candy, gummy candy, soda-pop candy, and chocolate; bakery products such as cookie, biscuit, and bread; deserts such as yogurt and ice cream; snacks such as potato chips and cracker; stew, curry, soup, dressing, sauce, noodle soup, bouillon stock, miso, instant bouillon, sauce, bouillon, jam, sprinkling topping, "as-you-like-it" pancake, miso soup, pickles, rice-ball topping, topping for tea and rice, semi-cooked or cooked foods such as wheat, buckwheat, and Chinese noodles, or the chilled and frozen foods thereof; instant foods such as instant noodle; and seasoning such as mixed powdery seasonings and mayonnaise.

Among the foods and beverages to which the flavor enhancer is compounded, particularly favorable for improvement in body are nutritious and nourishing drinks, functional drinks including nutrition supplement drinks, snack products such as potato chips and flavored cracker, savory processed foods such as curries, stews and soups, and the like. The forms of the savory processed food above include cooked and semi-cooked foods and the retort-pouch, chilled or frozen foods thereof.

The amount of the flavor enhancer of the present invention blended may vary according to the form of the flavor enhancer and the food or beverage to be blended with, but is preferred in the range of 0.000001 to 1.0 wt %, more preferably 0.00001 to 0.1 wt %, and still more preferably 0.00001 to 0.01 wt % as a vanillyl alcohol derivative with respect to the food or beverage. The flavor enhancer of the present invention can be blended by any one of known methods.

### Advantageous effect of the invention

The flavor enhancer of the present invention containing a vanillyl alcohol derivative represented by General Formula 1 above and/or a formed products of the vanillyl alcohol derivative gives a food or beverage a body, thickness, richness, width, smoothness, and others or enhances them without damaging the taste balance inherent to the food or beverage and also without sacrifice of the flavor and taste thereof. In addition, when the vanillyl alcohol derivative represented by General Formula 1 above and/or the formed product of the vanillyl alcohol derivative of the component (A) is used together with one or more materials selected from sweetenings, salty seasonings, and umami seasonings of the component (B) and a flavoring and/or a spice of the component (C) and this flavor enhancer of the present invention are added to a food or beverage as a flavor enhancer, the body of the food or beverage can be enhanced without need for excessive addition of sweetening, salty seasoning or umami seasoning in the components (B) and without altering the blending balance of spice and flavoring in the components (C) . Enhancement of taste by the flavor enhancer of the present invention is distinctively observed particularly in the body of food or beverage.

The flavor enhancer of the present invention is applicable to a wide range of foods and beverages having various flavors, and provides a food or beverage favorable in palatability.

### Best Mode for carrying Out the Invention

Hereinafter, the present invention will be described more specifically with reference to Examples, but it should be understood that the present invention is not restricted in any way by the following Examples.

### Example 1

### [Preparation of β-cyclodextrin (β-CD) inclusion compound of vanillyl-n-butyl ether (VBE)]

22.7g (0.02mol) of β-CD made by NIPPON SHOKUHIN KAKO was dissolved in 300 ml of water at 60°C with stirring, and then combined with 4.2 g (0.02 mol) of vanillyl-n-butyl ether made by TAKASAGO INTERNATIONAL. The solution was stirred for about 1 hour at the same temperature, and then cooled down, and the precipitated crystal was recovered by filtration at 5°C, washed with water, and lyophilized to obtain 22.0 g of the intended β-CD inclusion compound of vanillyl-n-butyl ether (VBE) as a white powder. The compound obtained had a molar ratio of β-CD : vanillyl-n-butyl ether of about 1:0.79 (128 mg of vanillyl-n-butyl ether in 1000 mg).

### Example 2

### [Preparation of flavor enhancer for beverage]

A flavor enhancer for beverage was prepared in accordance with the formulation indicated in Table 1 shown below.

**Table 1**

| Component | | Amount (% by weight) |
|---|---|---|
| Lemon essence | | 5.0 |
| Orange essence | | 2.0 |
| Clove essence | | 0.5 |
| Cassis essence | | 0.5 |
| Cinnamon essence | | 0.5 |
| Nutmeg essence | | 0.05 |
| Cardamon essence | | 0.05 |
| All spice essence | | 0.5 |
| Juniper berry essence | | 10.0 |
| Chili pepper essence | | 25.0 |
| VBE inclusion compound of Example 1 | | 0.1 |
| Ethyl alcohol | | 25.0 |
| glycerin | | 25.8 |
| Water | | 5.0 |
| | Total | 100 |

### Comparative example 1

### [Preparation of flavor improver for beverage]

Similarly to Example 2 except for using no inclusion compound of vanillyl-n-butyl ether, a flavor improver for beverage was prepared.

### Example 3

### [Preparation of flavor enhancer for snack food seasoning (pepper type) ]

A flavor enhancer for snack food seasoning was prepared in accordance with the formulation indicated in Table 2 shown below.

**Table 2**

| Component | | Amount (% by weight) |
|---|---|---|
| Black pepper flavor | | 1.5 |
| Butter flavor powder | | 0.5 |
| Umami seasoning (MSG*) | | 27.0 |
| Cooking salt | | 25.0 |
| Sugar powder | | 20.44 |
| Garlic powder | | 1.0 |
| Black pepper powder | | 9.0 |
| White pepper powder | | 5.0 |
| Skimmed milk | | 10.0 |
| Sour seasoning | | 0.5 |
| Sweetener (Stevia) | | 0.05 |
| Vanillyl-n-butyl ether | | 0.01 |
| | Total | 100 |

| | | |
|---|---|---|
| MSG*: Monosodium L-glutamate | | |

### Comparative example 2

### [Preparation of flavor improver for snack food seasoning (pepper type)]

Similarly to Example 3 except for using no vanillyl-n-butyl ether, a flavor improver for snack food seasoning was prepared.

### Example 4

### [Preparation of flavor enhancer for snack food seasoning (wasabi soy sauce type)]

A flavor enhancer for snack food seasoning was prepared in accordance with the formulation indicated in Table 3 shown below.

**Table 3**

| Component | | Amount (% by weight) |
|---|---|---|
| Wasabi flavor | | 1.2 |
| Soy sauce flavor | | 0.55 |
| Umami seasoning (Combined seasoning**) | | 50.0 |
| Sugar powder | | 20.55 |
| Wasabi powder | | 11.0 |
| Mustard powder | | 0.4 |
| Cooking salt | | 9.0 |
| Sour seasoning | | 0.2 |
| Sweetener(Stevia) | | 0.1 |
| Vanillyl-n-butyl ether | | 0.01 |
| Dextrin | | 6.99 |
| | Total | 100 |

| | | |
|---|---|---|
| Combined seasoning**: Monosodium L-glutamate and sodium 5'-inosinate | | |

### Example 5

### [Preparation of flavor enhancer for curry]

A flavor enhancer for curry was prepared in accordance with the formulation indicated in Table 4 shown below.

**Table 4**

| Component | | Amount (% by weight) |
|---|---|---|
| Curry flavor base | | 0.3 |
| Roasted garlic oil | | 0.3 |
| Red pepper oil | | 0.3 |
| Cumin oil | | 0.006 |
| Onion flavor | | 0.12 |
| MCT*** | | 0.114 |
| Beef flavor | | 0.61 |
| Curry powder | | 50.0 |
| Sugar powder | | 9.0 |
| Umami seasoning (MSG*) | | 5.0 |
| Mustard powder | | 0.4 |
| Cooking salt | | 20.55 |
| Sour seasoning | | 0.2 |
| Sweetener (Stevia) | | 0.1 |
| Vanillyl-n-butyl ether | | 1.0 |
| Dextrin | | 12.0 |
| | Total | 100 |

| | | |
|---|---|---|
| MSG*: Monosodium L-glutamate MCT***: Medium chain triglyceride | | |

### Comparative example 3

### [Preparation of flavor improver for curry]

Similarly to Example 5 except for using no vanillyl-n-butyl ether, a flavor improver for curry was prepared.

### Example 6

### [Preparation of nutrition supplement beverage (containing vanillyl-n-butyl ether inclusion compound)]

Using a flavor enhancer for beverage prepared in Example 2 containing the vanillyl-n-butyl ether inclusion compound, a nutrition supplement beverage was produced by a standard method in accordance with the formulation indicated in Table 5 shown below.

**Table 5**

| Component | | Amount (% by weight) |
|---|---|---|
| Fructose-glucose syrup | | 26.0 |
| Honey syrup | | 1.0 |
| Citric acid | | 0.72 |
| Sodium Vitamin B₂ phosphate | | 0.005 |
| Vitamin B₆ | | 0.005 |
| Amide nicotinate | | 0.02 |
| Vitamin B₁ nitrate | | 0.005 |
| Inositol | | 0.05 |
| Green tea extract | | 0.05 |
| Beverage flavor enhancer prepared in Example 2 | | 0.1 |
| Water | | 72.045 |
| | Total | 100 |

### Comparative example 4

### [Preparation of nutrition supplement beverage (containing no vanillyl-n-butyl ether inclusion compound)]

Similarly to Example 6 except for employing the flavor improver for beverage prepared in Comparative example 1 containing no vanillyl-n-butyl ether inclusion compound instead of the flavor enhancer for beverage, a nutrition supplement beverage was prepared.

### Example 7

### [Production of potato chips (containing vanillyl-n-butyl ether)]

95 g of potato chips before being seasoned were mixed with 5 g of the flavor enhancer for snack food seasoning prepared in Example 3 containing vanillyl-n-butyl ether by a standard method to produce seasoned potato chips.

### Comparative example 5

### [Preparation of potato chips (containing no vanillyl-n-butyl ether)]

Similarly to Example 7 except for employing the flavor improver for snack food seasoning prepared in Comparative example 2 containing no vanillyl-n-butyl ether instead of the flavor enhancer for snack food seasoning, seasoned potato chips were prepared.

### Example 8

### [Production of curry (containing vanillyl-n-butyl ether)]

The flavor enhancer for curry prepared in Example 5 containing vanillyl-n-butyl ether was used and materials were mixed by a standard method in accordance with the formulation shown in Table 6 to produce a curry.

**Table 6**

| Components | Amount (parts by weight) |
|---|---|
| Curry powder (commercial product) | 30 |
| Wheat flour | 70 |
| Salad oil | 100 |
| Water | 1300 |
| Flavor enhancer for curry prepared in Example 5 | 1.5 |
| Total | 1501.5 |

### Comparative example 6

### [Production of curry (containing no vanillyl-n-butyl ether)]

Similarly to Example 8 except for employing the flavor improver for curry prepared in Comparative example 3 containing no vanillyl-n-butyl ether instead of the flavor enhancer for curry, a curry was prepared.

### Example 9

### [Organoleptic evaluation of nutrition supplement beverage]

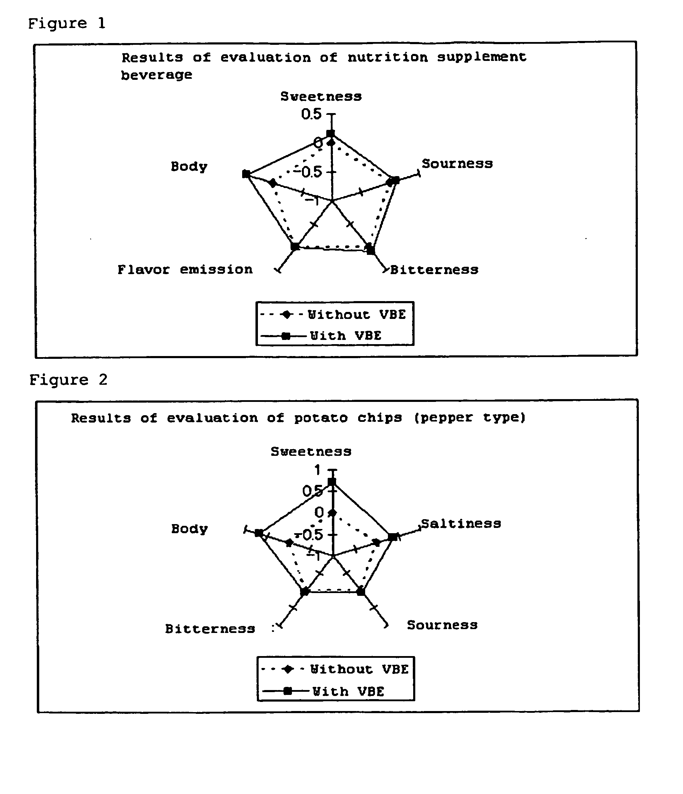

An organoleptic evaluation was conducted with regard to 5 items including body, sweetness, sourness, bitterness and flavor emission by 8 professional panelists. The nutrition supplement beverage produced in Example 6 was subjected to the organoleptic evaluation for the sensory intensities of the five items described above together with the nutrition supplement beverage produced in Comparative example 4 as a control. The comparison was made based on the intensity of the control being regarded as zero. The results of the evaluation were represented as mean values of the 8 panelists and shown in Figure 1. "VBE" in the figure indicates vanillyl-n-butyl ether (the same applies analogously to the following description).

As evident from the results shown in Figure 1, the nutrition supplement beverage containing vanillyl-n-butyl ether inclusion compound exhibited an enhanced body and an improved taste without deteriorating the flavor balance.

### Example 10

### [Organoleptic evaluation of potato chips]

An organoleptic evaluation was conducted with regard to 5 items including body, sweetness, saltiness, sourness and bitterness by 6 professional panelists. The potato chips produced in Example 7 were subjected to the organoleptic evaluation for the sensory intensities of the five items described above together with the potato chips produced in Comparative example 5 as a control. The comparison was made based on the intensity of the control being regarded as zero. The results of the evaluation were represented as mean values of the 6 panelists and shown in Figure 2.

As evident from the results shown in Figure 2, the potato chips containing vanillyl-n-butyl ether exhibited enhanced body, sweetness and saltiness, and an increased palatability.

### Example 11

### [Organoleptic evaluation of curry]

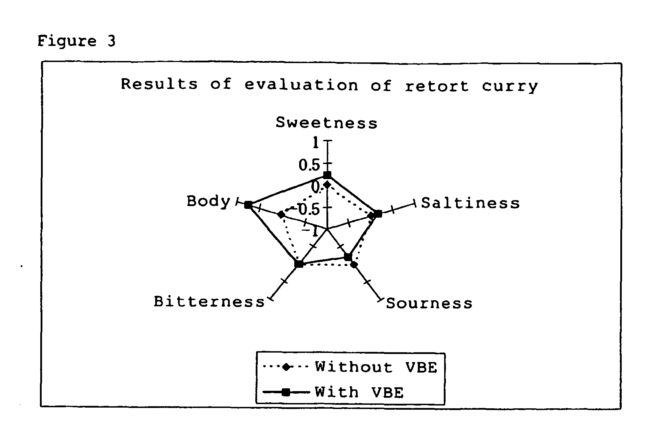

An organoleptic evaluation was conducted with regard to 5 items including body, sweetness, saltiness, sourness and bitterness by 6 professional panelists. The curry produced in Example 8 was subjected to the organoleptic evaluation for the sensory intensities of the five items described above together with the potato chips produced in Comparative example 6 as a control. The comparison was made based on the intensity of the control being regarded as zero. The results of the evaluation were represented as mean values of the 6 panelists and shown in Figure 3.

As evident from the results shown in Figure 3, the curry containing vanillyl-n-butyl ether exhibited enhanced body, improved taste without deteriorating the flavor balance and increased deliciousness.

### Example 12

### [Preparation of flavor enhancer for beverage (emulsified type)]

Into a vessel, 0.2 g of vanillyl butyl ether, 15 g of spice flavor made by Takasago International, 5 g of mixed fruit flavor made by Takasago International, 100 g of gum Arabic (as solid), 100 g of sorbitol, and 779.8 g of water were put and then heated it to 80°C to be dissolved and sterilized. The obtained aqueous gum Arabic solution was mixed for 30 minutes at 5000 to 12000 rpm. The solution was further treated under the conditions of 100 to 300 kg/cm² with a high pressure homogenizer to prepare an emulsified flavor enhancer for beverage.

### Example 13

### [Preparation of flavor enhancer for soup]

A flavor enhancer for soup was prepared in accordance with Table 7 shown below.

**Table 7**

| Component | | Amount (% by weight) |
|---|---|---|
| Chicken flavor base | | 2.0 |
| Onion flavor | | 1.0 |
| Ginger powder | | 10.0 |
| Pepper powder | | 10.0 |
| Sugar powder | | 20.0 |
| Cooking salt | | 20.0 |
| Umami Seasoning (Combined seasoning) | | 20.0 |
| Vanillyl-n-butyl ether | | 0.01 |
| Dextrin | | 16.99 |
| | Total | 100 |

### Comparative Example 7

### [Preparation of flavor improver for soup]

Similarly to Example 13 except for using no vanillyl-n-butyl ether, a flavor improver for soup was prepared

### Example 14

### [Preparation of chicken soup (containing vanillyl-n-butyl ether)]

3 g of commercial chicken powder was dissolved in hot water to obtain 100 g of chicken soup. The flavor enhancer for soup prepared in Example 13 containing vanillyl-n-butyl ether was added thereto to produce a chicken soup of this example.

### Comparative Example 8

### [Preparation of chicken soup (containing no vanillyl-n-butyl ether)]

Similarly to Example 14 except for employing the flavor improver of soup prepared in Comparative example 7 containing no vanillyl-n-butyl ether instead of the flavor enhancer for soup, a chicken soup was prepared.

### Example 15

### [Organoleptic evaluation of chicken soup]

An organoleptic evaluation was conducted by 11 professional panelists. The chicken soup produced in Example 14 was subjected to the organoleptic evaluation for the sensory intensities of the three items including body, umami, and taste together with the chicken soup produced in Comparative example 8 as a control.

In the results of the organoleptic evaluation 6 panelists evaluated that the soup of the Example 14 has enhanced body and umami in comparison with that of Comparative Example 8 and 6 panelists evaluated that the soup of the Example14 has clearer salty taste and higher taste than that of the soup of the Comparative example. Therefore the flavor and palatability of the chicken soup prepared in the Example 14 was increased by addition of the flavor enhancer for soup prepared in Example 13. The chicken soup of the Example 14 was improved in taste balance without the prominence of a particular taste and deliciousness thereof was increased.

## Claims

1. A flavor enhancer comprising;
(A) a vanillyl alcohol derivative represented by General Formula 1: 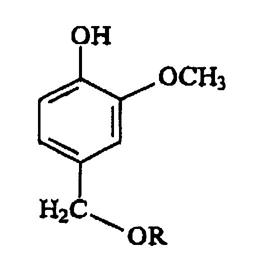 wherein R is an alkyl group having 1 to 6 carbon atoms, and/or a formed product thereof;
(B) one or more materials selected from salty seasonings and umami seasonings; and
(C) a flavoring and/or a spice.

2. The flavor enhancer according to claim 1, wherein R in General Formula 1 is a n-butyl group.

3. The flavor enhancer according to claim 1 or 2,
wherein the component (C) is at least one kind selected from ginger oleoresin, chili pepper oleoresin, pepper oleoresin, jamboo oleoresin, Japanese pepper oleoresin, gingerone, capsaicin, dihydrocapsaicin, piperine, piperidine, chavicine, spilanthol, α-sanshool, β-sanshool, sanshoamide, 4-(L-menthoxymethyl)-2-(3',4'-dihydroxyphenyl) 1,3-dioxolane, 4-(L-menthoxymethyl)-2-(3'-methoxy-4'-hydroxyphenyl)-1,3-dioxolane, 4-(L-menthoxymethyl)-2-(3'-ethoxy-4'-hydroxyphenyl)-1,3-dioxolane, alkanoic vanillyl amides (wherein the alkanoic acid has 7 to 12 carbon atoms), vanillin alkylene glycol acetals (wherein the alkylene group has 3 to 6 carbon atoms), and ethyl vanillin alkylene glycol acetal (wherein the alkylene group has 3 to 6 carbon atoms).

4. A food or beverage containing any one of flavor enhancers according to Claims 1 to 3.

5. A method for enhancing the flavor of a food or beverage comprising incorporating any one of flavor enhancers according to claims 1 to 3 into the food or beverage.

## Patentansprüche

1. Geschmacksverstärker mit:
(A) einem Vanillylalkoholderivat, repräsentiert durch die allgemeine Formel 1: 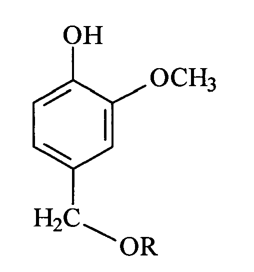 (wobei R eine Alkylgruppe mit 1 bis 6 Kohlenstoff Atomen) und/oder ein daraus gebildetes Produkt ist);
(B) einem oder mehreren Materialien ausgewählt aus salzigen Würzen und Umami Würzen; und
(C) einem Aroma und/oder Gewürz.

2. Geschmacksverstärker nach Anspruch 1, wobei R in der allgemeinen Formel 1 eine n-Butyl-Gruppe ist.

3. Geschmacksverstärker nach Anspruch 1 oder 2, wobei die Komponente (C) mindestens eine ausgewählt aus Ingweroleoresin, Chilipfefferoleoresin, Pfefferoleoresin, Jamboooleoresin, Japanisches Pfefferoleoresin, Zingeron, Capsaicin, Dihydrocapsaicin, Piperin, Piperidin, Cavicin, Spilanthol, α-Sanshool, β-Sanshool, Sanshoamid, 4-(L-Menthoxymethyl)-2-(3',4'-dihydroxyphenyl)- 1,3-dioxolan ,4-(L-Menthoxymethyl)-2-(3'-methoxy-4'-hydroxyphenyl)-1,3-dioxolan , 4-(L-Menthoxymethyl)-2-(3'-Ethoxy-4'- hydroxyphenyl)-1,3-dioxolan , Alkanvanillylamid (wobei die Alkansäure 7 bis 12 Kohlenstoff atome hat), Vanillinalkylenglycolacetal (wobei die Alkylen-Gruppe 3 bis 6 Kohlenstoffatome hat), und Ethylvanillinalkylenglycolacetal (wobei die Alkylen Gruppe 3 bis 6 Kohlenstoffatome hat).

4. Nahrungsmittel oder Getränk mit einem der Geschmacksverstärker nach den Ansprüchen 1 bis 3.

5. Verfahren zum Verstärken des Geschmacks eines Nahrungsmittels oder Getränks mit Einführen eines Geschmacksverstärkers nach den Ansprüchen 1 bis 3 in das Nahrungsmittel oder Getränk.

## Revendications

1. Un renforçateur d'arome comprenant:
(A) un dérivé vanillyl alcool représenté par la formule générale 1: 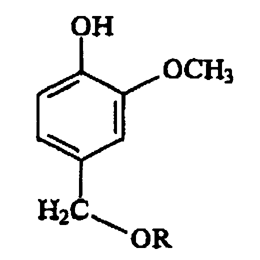 où R est un groupe alkyle ayant 1 à 6 atomes de carbone, et /ou un produit formé de celui;
(B) l'un ou plusieurs matériaux sélectés d'entre les assaisonnements salés et les assaisonnements umami; et
(C) un arôme et/ou une épice.

2. Le renforçateur d'arôme selon la revendication 1, où R dans la formule générale 1 est un groupe n-butyle.

3. Le renforçateur d'arome selon la revendication 1 ou 2, où le composant (C) est au moins un genre sélecté d'entre l'oléorésine de gingembre, l'oléorésine de poivre de chili, l'oléorésine de poivre, l'oléorésine jamboo, l'oléorésine de poivre japonais, le gingerone, la capsaïcine, la dihydrocapsaïcine, la pipérine, la pipéridine, la chavicine, le spilanthol, le α-sanshool, le β-sanshool, la sanchoamide, le 4-(L-menthoxymethyl)-2-(3',4'-dihydroxyphenyl)-1,3-dioxolane, le 4-(L-menthoxymethyl)-2-(3'-methoxy-4'-hydroxyphenyl)-1,3-dioxolane, le 4-(L-menthoxymethyl)-2-(3'-ethoxy-4'-hydroxyphenyl)-1,3-dioxolane, les amides alcanoïques vanillyl (où l'acide alcanoïque présente 7 à 12 atomes de carbone), les vanilline alkylène glycol acétals (où le groupe alkylène présente 3 à 6 atomes de carbone), et l'éthyle vanilline alkylène glycol acétal (où le groupe alkylène présente 3 à 6 atomes de carbone).

4. Un aliment ou boisson contenant l'un quelconque d'entre les renforçateurs d'arôme selon aux revendications 1 à 3.

5. Un procédé de renforcement d'arôme d'un aliment ou boisson comprenant l'incorporation de l'un quelconque d'entre les renforçateurs d'arôme selon les revendications 1 à 3 dans l'aliment ou boisson.
